# EUROPEAN PATENT APPLICATION

(11) **EP 4 492 031 A1**
(43) Date of publication of application: **15.01.2025**
(21) Application number: 24187932.9
(22) Date of filing: 11.07.2024
(51) Int. Cl.: G01M 11/00, G02B 6/42, H04B 10/071

(54) **OPTICAL SUB-ASSEMBLY WITH OTDR FILTER AND METHOD OF ASSEMBLING THEREOF**

(30) Priority: 11.07.2023 US 202363525974 P
(71) Applicant: Ezconn Corporation, New Taipei City 251 (TW)
(72) Inventor: WU, Chin-Tsung, 251 New Taipei City (TW)
(74) Representative: Michalski Hüttermann & Partner Patentanwälte mbB

(57) **Abstract**

The present invention discloses an optical sub-assembly with OTDR filter, comprising a plug-in unit and a sending/receiving unit. The sending/receiving unit includes a main body surrounding an axis, an upstream transmitter, an isolator, a first filter, a second filter and a downstream receiver. The plug-in unit includes a housing, a fiber stub, a sleeve, a stopper and an OTDR filter. The present invention discloses that the OTDR optical reflector (OTDR filter) is installed inside the optical sub-assembly, it saves space and costs by omitting the conventional FBG and can achieve the same effect as reflecting the OTDR monitoring light.

## Description

### RELATED APPLICATIONS

This application is a non-provisional of, claims the benefit and priority of provisional Application No. 63/525,974, filed Jul. 11, 2023, which is incorporated herein by reference in its entirety.

### TECHNICAL FIELD

The present invention relates to an optical sub-assembly. More particularly, the invention relates to an optical sub-assembly with OTDR filter and method of assembling thereof.

### BACKGROUND

To face the advent of a highly information-based society, communication infrastructure is needed to transmit various kinds of information, such as voice, text, data, images, etc. Accordingly, the optical communication network was developed to replace the conventional copper cable networks for huge information transmission. As known, in the field of optical communication, the optical fiber is especially suitable for serving as the medium for light transmission over long distances due to its advantages of low loss and wide bandwidth.

In the realm of fiber optic networks, the absence of adequate detection and localization devices for signal issues can lead to significant operational challenges and potential risks. Particularly in systems where multiple wavelengths coexist within a single infrastructure, the lack of corresponding equipment capable of real-time detection and accurate error localization poses serious consequences.

When fiber optic signals encounter issues such as breaks, bends, or attenuation, timely detection is crucial for swiftly identifying and rectifying the problem. However, in environments where diverse wavelengths are simultaneously operational, conventional monitoring tools may struggle to differentiate between signals or accurately pinpoint the exact location of faults. This limitation arises because existing systems often lack the capability to distinguish between different wavelength channels or fail to provide precise feedback on signal integrity across the spectrum.

As a result, undetected or improperly localized signal impairments can lead to prolonged network downtime, reduced data transmission efficiency, and potential service disruptions. Moreover, the inability to promptly address these issues may escalate into more extensive failures or network outages, impacting critical services and customer satisfaction. In industries reliant on seamless data connectivity, such as telecommunications, finance, and healthcare, these repercussions can translate into substantial financial losses and reputational damage.

The challenge persists in developing advanced monitoring and diagnostic technologies capable of handling the complexities of multi-wavelength fiber optic systems effectively. Innovations are needed to enhance the granularity of fault detection, improve the accuracy of fault localization across diverse wavelength bands, and streamline the troubleshooting process. By addressing these technical gaps, future advancements aim to mitigate risks associated with signal disruptions, ensuring robust network performance and uninterrupted service delivery in increasingly interconnected digital environments.

An Optical Time Domain Reflectometer (OTDR) is a crucial tool in the maintenance and troubleshooting of fiber optic networks. It operates by sending a pulse of light into a fiber optic cable and then analyzing the reflections that come back. This technique allows OTDRs to pinpoint faults, breaks, bends, or other imperfections in the fiber optic line with remarkable accuracy.

The fundamental principle behind OTDR operation lies in its ability to measure the round-trip time of a light pulse as it travels down the fiber and reflects back. When the pulse encounters a change in the fiber's optical characteristics (such as a break or a splice), part of the pulse is reflected back to the OTDR. The device then measures the time delay between sending the pulse and receiving the reflection, which corresponds to the distance to the point of reflection. By analyzing these reflections over time, OTDRs create a visual trace (often referred to as an OTDR trace) that graphically represents the condition of the fiber optic cable.

In network maintenance, OTDRs are invaluable for identifying faults and assessing the overall health of fiber optic cables. They can detect issues such as:
1. fiber cuts: OTDRs can precisely locate breaks or cuts in the fiber optic cable by measuring the distance to the point where the signal reflection abruptly stops.
2. splices and connectors: OTDR traces show the attenuation caused by splices (where two fibers are joined) or connectors (where fibers are connected to other network equipment). This helps technicians assess the quality of splicing work and identify potential sources of signal loss.
3. bends and stress points: even minor bends in fiber optic cables can cause signal loss or back-reflections. OTDRs can detect these bends and assess their impact on signal integrity.
4. overall fiber quality: by analyzing the entire OTDR trace, technicians can evaluate the overall quality of the fiber optic link, including its attenuation characteristics and potential degradation over time.

In Passive Optical Network (PON) systems, where a single fiber from a central office (OLT) splits into multiple fibers (ONUs), OTDR faces specific challenges. PON systems commonly use splitter ratios like 1:8, 1:16, or 1:32, making it difficult to isolate faults to a specific fiber without additional measures. While OTDR can determine the general location of a fault along the fiber span, it cannot distinguish between individual fibers within the splitter branch.

To address these challenges, external OTDR reflectors are sometimes used. These reflectors, placed strategically before the BOSA (Broadband Optical Service Access) or TRI-DI (TRIplexer Dual Interleaver) units, reflect OTDR signals back toward the OTDR device. This setup allows for the establishment of an OTDR correlation database, enabling more accurate fault localization within the network. However, this approach requires additional equipment, space, and increases costs.

Looking ahead, there is a growing interest in developing internal solutions within BOSA or TRI-DI units that could effectively reflect OTDR signals back without dispersion issues. Overcoming the challenge of light dispersion once it exits the fiber is crucial for simplifying network maintenance and reducing costs associated with external reflectors.

In conclusion, while OTDR technology provides powerful capabilities for diagnosing and maintaining fiber optic networks, challenges persist in effectively managing PON systems and accurately pinpointing faults within them. Continued innovation in OTDR technology holds the promise of enhancing network reliability and operational efficiency in the future.

In view of the above, there are many bottlenecks in the prior art, the present invention overcomes the above problems, and proposes a practical passive optical network dual system module.

### SUMMARY

One purpose of the present invention is to provide a kind of optical sub-assembly with an OTDR filter, which enables the OTDR to emit light signals at specific wavelengths and reflect them directly back into the optical fiber. Thus, when the OTDR receives a reflected signal and determines it originates from the user endpoint, the system can confirm that the fiber optic line is in normal working condition.

Another purpose of the present invention is to provide a kind of optical sub-assembly with an OTDR filter designed to ensure that, within a single system where multiple wavelengths may operate simultaneously, the reflection of light signals at specific wavelengths does not impact the transparency of other wavelength signals.

To achieve the above-mentioned purposes, the present invention proposes an optical sub-assembly with an OTDR filter, the optical sub-assembly with an OTDR filter comprises a sending/receiving unit and a plug-in unit. The sending/receiving unit includes a main body, an upstream transmitter, an isolator, a first filter, a second filter, and a downstream receiver. The first filter is arranged inside the main body and arranged relative to the second filter and adjacent to the isolator. The plug-in unit includes a housing, a fiber stub, a sleeve, a stopper, and an OTDR filter. The OTDR filter is partially connected to the fiber stub and covers the light outlet. Wherein, the OTDR filter is installed inside the plug-in unit and reflects a specific wavelength emitted by the OTDR to detect signals from the optical fiber.

To achieve the above-mentioned purposes, the present invention also proposes a method of assembling an optical sub-assembly, comprising the steps of: in first step, setting a first filter, a second filter, and an isolator on a main body; in second step, combining an upstream transmitter with the main body through laser welding; in third step, pressing a fiber stub into a housing and inserting a sleeve, then using a stopper to prevent the sleeve from moving; in forth step, adhering an OTDR filter to the fiber stub to obtain a plug-in unit; in fifth step, coupling the plug-in unit to the main body using a z-axis ring with laser welding when the coupling light reaches the target optical power; and in last step, inserting a downstream receiver into the main body for optical coupling, then filling any gaps with glue and curing for bonding. Wherein, the OTDR filter can reflect a specific wavelength emitted by the OTDR to detect signals from the optical fiber.

In some embodiments, the first filter and the second filter are arranged at specific angles relative to each other.

In some embodiments, the first filter is arranged at a 45-degree angle with respect to the axis of the main body.

In some embodiments, the second filter is parallel to the axis of the main body.

In some embodiments, the housing is made of metal.

In some embodiments, the OTDR filter is made of optical glass.

In some embodiments, the size of the OTDR filter is 1.4 mm x 0.6 mm x 0.1 mm.

In some embodiments, the end face of the fiber stub is polished at an angle between 4 degrees and 8 degrees.

In some embodiments, the first side surface of the OTDR filter faces the light outlet and has a reflective coating layer. And further, the reflective coating layer of the first side surface of the OTDR filter can be made of pure material or composite material.

In some embodiments, the reflective coating layer of the first side surface of the OTDR filter is made of pure material or composite material.

Accordingly, the present invention, the purposes of integrating an OTDR reflection filter into a pluggable optical transceiver module (BOSA) to enable the OTDR to emit light at a specific wavelength that is then directly reflected back into the optical fiber through the OTDR reflection filter. This setup allows the system to detect the reflected signal and pinpoint its origin at the user endpoint, thereby confirming the normal operation of the fiber optic line. This capability enhances the system's ability to accurately assess the status of fiber optic networks, especially in environments with multiple endpoints and wavelengths.

Secondly, the OTDR reflection filter is designed to operate alongside other wavelengths within the system without affecting their transparency. It accomplishes this by reflecting light signals at specific wavelengths while ensuring that the transmission of other wavelength signals remains unaffected. This dual-purpose approach ensures that the system can utilize OTDR for precise location determination while maintaining uninterrupted communication across the entire fiber optic network.

### BRIEF DESCRIPTION OF THE DRAWINGS

Unless specified otherwise, the accompanying drawings illustrate aspects of the innovative subject matter described herein. Referring to the drawings, wherein like reference numerals indicate similar parts throughout the several views, several examples of heatsink fins incorporating aspects of the presently disclosed principles are illustrated by way of example, and not by way of limitation.
FIG. 1 depicts a cross-sectional perspective view of an exemplary embodiment of the present invention of an optical sub-assembly with OTDR filter.
FIG. 2 depicts a schematic of a plurality of lights traveling paths within the optical sub-assembly with OTDR filter.
FIG. 3 depicts an enlarged perspective view of the dashed-circle region in FIG. 2.
FIG. 4 depicts an enlarged perspective view of an alternative embodiment of an optical sub-assembly with OTDR filter, illustrating polishing of an end face of a fiber stub at a larger angle.

### DETAILED DESCRIPTION

To solve the problems in prior art, an optical inspection device is disclosed in the present invention. The optical inspection device of the present invention can detect and/or inspect different positions of an object at the same time without significant changes of the structure and/or element of the interferometer, and can obtain the coherence effect optical information of different optical path. Thus, the optical information can be processed and analyzed. Also, the present invention can be applied to various field of inspection and/or detection, particularly in biological detection/inspection, industrial detection/inspection, semiconductor industrial detection/inspection and so on.

Unless specified otherwise, the accompanying drawings illustrate aspects of the innovative subject matter described herein. Referring to the drawings, wherein like reference numerals indicate similar parts throughout the several views, several examples of coaxial cable connector incorporating aspects of the presently disclosed principles are illustrated by way of example, and not by way of limitation.

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

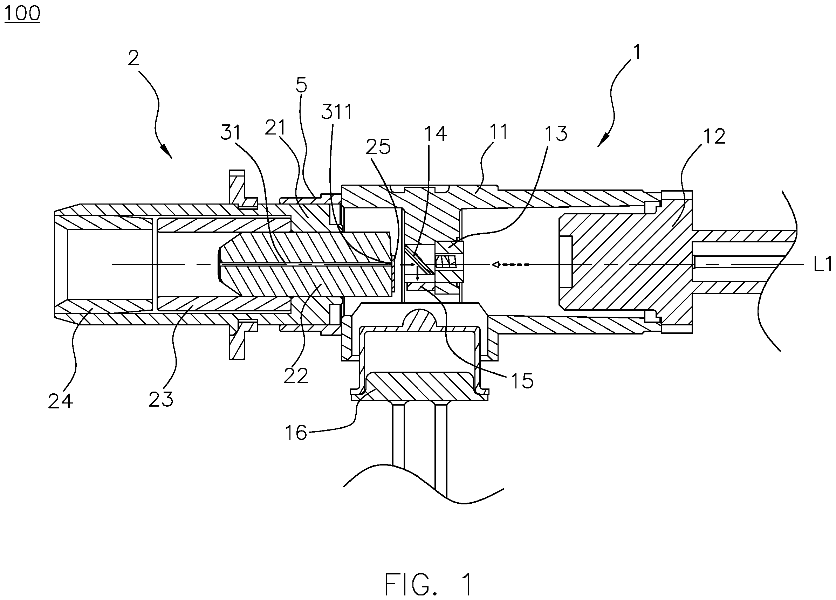

The present invention will now be described by referencing the appended figures representing preferred embodiments. FIG. 1 shows a cross-sectional perspective view of an exemplary embodiment of the present invention of an optical sub-assembly with OTDR filter. Referring to FIG. 1, the present invention provides an optical sub-assembly with OTDR filter 100. The optical sub-assembly with OTDR filter 100 includes a sending/receiving unit 1, and a plug-in unit 2.

The sending/receiving unit 1, as shown in FIG. 1, includes a main body 11 surrounding an axis L1, an upstream transmitter 12, an isolator 13, a first filter 14, a second filter 15, and a downstream receiver 16. The first filter 14 is arranged inside the main body 11 at a specific angle relative to the second filter 15 and adjacent to the isolator 13. In this embodiment, the length direction of the second filter 15 is parallel to the axis L1, and the second filter 15 is defined as 0° filter; the first filter 14 is arranged at a 45-degree angle with respect to the axis L1, and the first filter 14 is defined as 45° filter. In some embodiments, the first filter 14 and the second filter 15 can be arranged at other angles depending on the requirements of the optical path.

The sending/receiving unit 1, as shown in FIG. 1, includes a main body 11 surrounding an axis L1, an upstream transmitter 12, an isolator 13, a first filter 14, a second filter 15, and a downstream receiver 16. The first filter 14 is arranged inside the main body 11 at a specific angle relative to the second filter 15 and adjacent to the isolator 13. In this embodiment, the length direction of the second filter 15 is parallel to the axis L1, and the second filter 15 is defined as 0° filter; the first filter 14 is arranged at a 45-degree angle with respect to the axis L1, and the first filter 14 is defined as 45° filter. In some embodiments, the first filter 14 and the second filter 15 can be arranged at other angles depending on the requirements of the optical path.

The plug-in unit 2, as shown in FIG. 1, includes a housing 21, a fiber stub 22, a sleeve 23, a stopper 24, and an OTDR filter 25. The housing 21 is usually made of metal. Wherein, fiber 31 passes through the fiber stub 22 and has a light outlet 311. The OTDR filter 25 is partially connected to the fiber stub 22 and covers the light outlet 311.

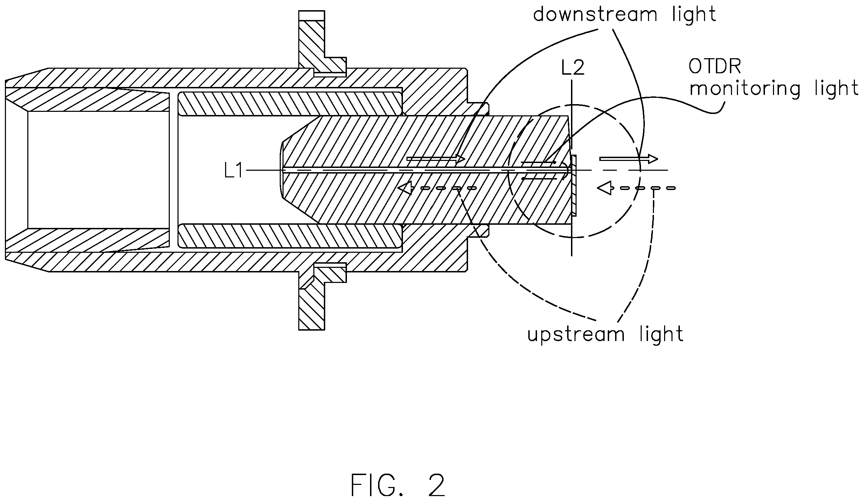

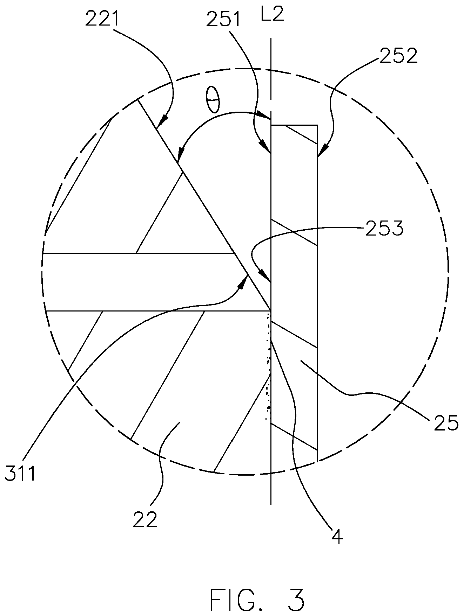

FIG. 2 shows a schematic of a plurality of lights traveling paths within the optical sub-assembly with OTDR filter. FIG. 3 shows an enlarged perspective view of the dashed-circle region in FIG. 2. Referring to FIG. 2 and FIG. 3, an end face 221 of the fiber stub 22 is polished. There is an angle θ from four degrees to eight degrees on the end face 221 of the fiber stub 22 that relates to a virtual line L2. The virtual line L2 is substantially perpendicular to the axis L1. The OTDR filter 25 has a first side surface 251 facing the light outlet 311 and a second side surface 252 opposite to the first side surface 251. The fiber stub 22 is connected to the lower half of the first side surface 251 of the OTDR filter 25 through an adhesive 4, excluding the region 253 covering the light outlet 311. In order to get the OTDR filter 25 as close to the light outlet 311 as possible, the adhesive 4 should be as thin as possible. The adhesive 4 should not seep out the light outlet 311. In this embodiment, the OTDR filter 25 is made of optical glass, and the size of the OTDR filter 25 is 1.4 mm x 0.6 mm x 0.1 mm. The first side surface 251 of the OTDR filter 25 is coated with a coating layer to reflect the OTDR monitoring light from the optical line terminal (OLT) end. In this embodiment, the OTDR monitoring light wavelength ranges from 1615 to 1660nm. The OTDR filter 25 can provide the effect of reflecting OTDR monitoring light with a reflectivity between 20% and 50%. As for the material of the reflective coating layer, the reflective coating layer of the first side surface 251 of the OTDR filter 25 can be made of pure material or composite material according to the requirements of different OTDR monitoring light wavelengths or specific applications.

In some embodiments, the OTDR monitoring light wavelength can also use other wavelength bands conforming to the optical communication protocol, such as the OTDR monitoring light with a central wavelength of 1310 nm. In some embodiments, the second side surface 252 of the OTDR filter 25 is coated with an anti-reflection layer. The anti-reflection layer can not only improve the light transmittance but also provide an anti-mold effect.

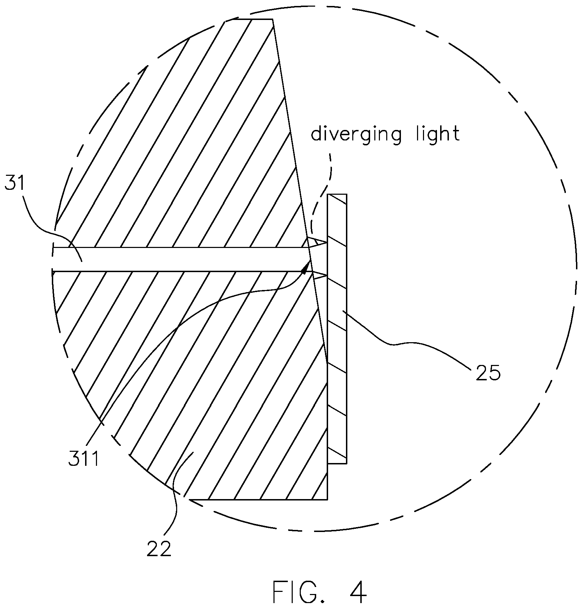

FIG. 4 shows an enlarged perspective view of an alternative embodiment of an optical sub-assembly with OTDR filter, illustrating polishing of an end face of a fiber stub at a larger angle. Referring to FIG. 4, since the light coming out of the optical fiber 31 will diverge as soon as it enters the air medium, if the OTDR filter 25 is not close to the light outlet 311, it will cause more light to diverge and cause loss. A better design would be to arrange one edge of the light outlet 311 as close as possible to the OTDR filter 25 without an air gap, thereby preventing light loss. In addition, other media can be filled between the fiber stub 22 and the OTDR filter 25 located below the light outlet 311 of fiber to reduce light loss and increase light reflected back into the fiber.

The following is a brief introduction to the assembly process of this present invention:

First, set the first filter 14, the second filter 15, and the isolator 13 on the main body 11, and then combine the upstream transmitter 12 with the main body 11 through laser welding. Next, press the fiber stub 22 into the housing 21 and insert the sleeve 23, and then use the stopper 24 to block the opening in the housing 21 to prevent the sleeve 23 from moving. The OTDR filter 25 is then adhered to the fiber stub 22, and thus the plug-in unit 2 is obtained. The plug-in unit 2 is coupled to the main body 11 using a z-axis ring 5 with laser welding when the coupling light reaches the target optical power. Finally, insert the downstream receiver 16 into the main body 11 for optical coupling, then use glue to fill in any gaps and cure for bonding, thus completing the assembly of the optical sub-assembly with OTDR filter 100. This innovative structure can be applied not only to receptacle-type optical sub-assembly, but also to pigtail-type, etc.

Referring to FIG.1 and FIG. 2, the light traveling path is used as an illustration below to understand the advantages of the present invention. The upstream transmitter 12 transmits the optical signal carrying data, and after passing through the isolator 13 and the first filter 14, it focuses on the fiber 31; in the other side, after diverging from the fiber 31, the optical signal for downloading data is reflected by the first filter 14 for 90 degrees, then passed through the second filter 15, and finally transmitted to the downstream receiver 16. Wherein, the first filter 14 (45° filter) allocates different optical wavelengths for transmission and reception, and the second filter 15 (0° filter) isolates optical crosstalk generated by other wavelengths to only pass the optical wavelengths that are being received. As shown above, it represents the path of a bi-directional optical sub-assembly. In some embodiments, the optical sub-assembly can also be a tri-directional optical sub-assembly (TRI-DI OSA), or a one-directional optical sub-assembly, etc.

By using this structure, as the 1650nm wavelength light source used by the data center OTDR reaches the optical transmitter at the user's end, it checks the signals from the optical fiber. An additional optical reflection device (OTDR filter) can be used to reflect and return the OTDR 1650nm light. The optical sub-assembly without an optical reflection device (OTDR filter), when light enters the air from the light outlet, it cannot reflect the light source and transmit the light back, so that the OTDR at the OLT cannot determine whether the information transmission process from the OLT to the user's end is normal.

As the OTDR optical reflector (OTDR filter) is installed inside the optical sub-assembly, it has the advantages of saving space and saving costs by omitting the conventional FBG and can also achieve the same effect as reflecting the OTDR monitoring light.

According to the present invention, the two technologies aim to achieve the following:

### 1. Providing precise reflective positioning capability:

Integrating an OTDR reflection filter into a pluggable optical transceiver module (BOSA) enables the OTDR to emit light at a specific wavelength. This light is directly reflected back into the optical fiber through the OTDR reflection filter. By detecting the reflected signal and determining its origin at the user endpoint, the system can confirm that the fiber optic line is operating normally. The key objective of this technology is to enhance the system's ability to accurately assess the status of fiber optic networks, particularly in environments with multiple endpoints and wavelengths.

### 2. Non-Impact on other wavelengths' transparency:

The design of the OTDR reflection filter considers the potential coexistence of multiple wavelengths within the system. One of its primary functions is to reflect light signals at specific wavelengths without affecting the transparency of other wavelength signals. This ensures that the system can use OTDR for precise location determination while maintaining uninterrupted communication for other optical fiber transmissions.

This dual-purpose approach guarantees the efficient operation and communication effectiveness of the entire fiber optic network.

As used herein, "wavelengths" may include a specified wavelength band around a center wavelength. The term "coupled" as used herein refers to any connection, coupling, link or the like and "optically coupled" refers to coupling such that light from one element is imparted to another element.

The presently disclosed inventive concepts are not intended to be limited to the embodiments shown herein, but are to be accorded their full scope consistent with the principles underlying the disclosed concepts herein. Directions and references to an element, such as "up," "down,", "upper," "lower," "horizontal," "vertical," "left," "right," and the like, do not imply absolute relationships, positions, and/or orientations. Terms of an element, such as "first" and "second" are not literal, but, distinguishing terms. As used herein, terms "comprises" or "comprising" encompass the notions of "including" and "having" and specify the presence of elements, operations, and/or groups or combinations thereof and do not imply preclusion of the presence or addition of one or more other elements, operations and/or groups or combinations thereof. Sequence of operations do not imply absoluteness unless specifically so stated. Reference to an element in the singular, such as by use of the article "a" or "an", is not intended to mean "one and only one" unless specifically so stated, but rather "one or more". As used herein, "and/or" means "and" or "or", as well as "and" and "or." As used herein, ranges and subranges mean all ranges including whole and/or fractional values therein and language which defines or modifies ranges and subranges, such as "at least," "greater than," "less than," "no more than," and the like, mean subranges and/or an upper or lower limit. All structural and functional equivalents to the elements of the various embodiments described throughout the disclosure that are known or later come to be known to those of ordinary skill in the relevant art are intended to be encompassed by the features described and claimed herein. Moreover, nothing disclosed herein is intended to be dedicated to the public regardless of whether such disclosure may ultimately explicitly be recited in the claims. No element or concept disclosed herein or hereafter presented shall be construed under the provisions of 35 USC 112(f) unless the element or concept is expressly recited using the phrase "means for" or "step for".

In view of the many possible embodiments to which the disclosed principles can be applied, we reserve the right to claim any and all combinations of features and acts described herein, including the right to claim all that comes within the scope and spirit of the foregoing description, as well as the combinations recited, literally and equivalently, in the following claims and any claims presented anytime throughout prosecution of this application or any application claiming benefit of or priority from this application.

## Claims

1. An optical sub-assembly with OTDR filter, comprising:
a sending/receiving unit, including a main body, an upstream transmitter, an isolator, a first filter, a second filter, and a downstream receiver, and the first filter arranged inside the main body and arranged relative to the second filter and adjacent to the isolator; and
a plug-in unit, including a housing, a fiber stub, a sleeve, a stopper, and an OTDR filter, wherein, fiber passes through the fiber stub and has a light outlet, and the OTDR filter is partially connected to the fiber stub and covers the light outlet;
wherein the OTDR filter is installed inside the plug-in unit and reflects a specific wavelength emitted by the OTDR to detect signals from an optical fiber.

2. The optical sub-assembly with OTDR filter of the previous claim, wherein the first filter is arranged at a 45-degree angle with respect to the axis of the main body.

3. The optical sub-assembly with OTDR filter of any of the previous claims, wherein the second filter is parallel to the axis of the main body.

4. The optical sub-assembly with OTDR filter of claim 1, wherein the housing is made of metal.

5. The optical sub-assembly with OTDR filter of any of the previous claims, wherein the OTDR filter is made of optical glass.

6. The optical sub-assembly with OTDR filter of any of the previous claims, wherein the size of the OTDR filter is 1.4 mm x 0.6 mm x 0.1 mm.

7. The optical sub-assembly with OTDR filter of any of the previous claims, wherein the end face of the fiber stub is polished at an angle between 4 degrees and 8 degrees.

8. The optical sub-assembly with OTDR filter of any of the previous claims, wherein the first side surface of the OTDR filter faces the light outlet and has a reflective coating layer.

9. The optical sub-assembly with OTDR filter of the previous claim, wherein the reflective coating layer of the first side surface of the OTDR filter is made of pure material or composite material.

10. A method of assembling an optical sub-assembly, comprising the steps of:
setting a first filter, a second filter, and an isolator on a main body;
combining an upstream transmitter with the main body through laser welding;
pressing a fiber stub into a housing and inserting a sleeve, then using a stopper to prevent the sleeve from moving;
adhering an OTDR filter to the fiber stub to obtain a plug-in unit;
coupling the plug-in unit to the main body using a z-axis ring with laser welding when the coupling light reaches the target optical power; and
inserting a downstream receiver into the main body for optical coupling, then filling any gaps with glue and curing for bonding;
wherein the OTDR filter can reflect a specific wavelength emitted by the OTDR to detect signals from an optical fiber.

11. The method of assembling an optical sub-assembly of the previous claim, wherein
the first filter is arranged at a 45-degree angle with respect to the axis of the main body,
the second filter is parallel to the axis of the main body, and/or
the housing is made of metal.

12. The method of assembling an optical sub-assembly of any of the two previous claims, wherein the OTDR filter is partially connected to the fiber stub and covers the light outlet and/or wherein the OTDR filter is made of optical glass.

13. The method of assembling an optical sub-assembly of any of the three previous claims, wherein the size of the OTDR filter is 1.4 mm x 0.6 mm x 0.1 mm.

14. The method of assembling an optical sub-assembly of any of the four previous claims, wherein the end face of the fiber stub is polished at an angle between 4 degrees and 8 degrees.

15. The method of assembling an optical sub-assembly of any of the five previous claims, wherein
the first side surface of the OTDR filter faces the light outlet and has a reflective coating layer,
the second side surface of the OTDR filter is coated with an anti-reflection layer, and/or
the anti-reflection layer is partially or completely coated on the second side surface of the OTDR filter.
